# FASCICULE DE BREVET EUROPEEN

(11) **EP 1 944 477 B1**
(45) Date de publication et mention de la délivrance du brevet: **18.08.2010**
(21) Numéro de dépôt: 08150060.5
(22) Date de dépôt: 04.01.2008
(51) Int. Cl.: F01L 3/06, F02F 1/42

(54) **Siège de soupape usiné en plusieurs chanfreins**
Ventilsitz in Ausführung mit mehreren Fasen
Valve seat machined in several chamfers

(30) Priorité: 11.01.2007 FR 0752631
(43) Date de publication de la demande: 16.07.2008
(73) Titulaire: PEUGEOT CITROËN AUTOMOBILES SA, 78140 Vélizy Villacoublay (FR)
(72) Inventeur: Lutz, Patrick, 92340, Bourg la Reine (FR); Chemisky, Jean-Pierre, 92400, Courbevoie (FR); Gimbres, David, 94510, La Queue en Brie (FR)
(74) Mandataire: Ménès, Catherine

(56) Documents cités:
- EP-A- 1 493 910
- EP-A2- 1 167 700
- DD-A3- 234 998
- FR-A- 2 875 537
- US-A- 1 733 696
- US-A1- 2004 084 005

## Description

La présente invention concerne un moteur à combustion interne de véhicule automobile, du type comprenant au moins un cylindre et une culasse formant ensemble une chambre de combustion, la culasse comportant au moins un conduit de circulation de gaz débouchant sur une face de sortie de la culasse, le conduit comportant successivement, dans le sens orienté vers la face de sortie, un siège de soupape d'axe (X-X') pour recevoir une soupape puis une embouchure vers la face de sortie, l'embouchure comprenant :
- une première face comprenant une portion désaxée de tronc de profil de révolution s'évasant vers la face de sortie, ladite portion désaxée étant désaxée par rapport à l'axe (X-X') du siège de soupape ; et
- une deuxième face comprenant une première portion de tronc de profil de révolution s'évasant vers la face de sortie, une infinité de plans perpendiculaires à l'axe (X-X') du siège de soupape coupant la première face et ladite première portion.

Le document FR-A-2 875 537 décrit une culasse de moteur à combustion interne de véhicule automobile comportant un conduit d'admission des gaz débouchant sur une face de sortie de la culasse. Le conduit d'admission comporte, dans le sens orienté vers la face de sortie, un siège de soupape d'axe X-X' pour recevoir une soupape puis une embouchure vers la face de sortie. L'embouchure comprend une première face en portion de tronc de cône ou de cylindre, l'axe de la première face étant incliné par rapport à l'axe X-X'. L'embouchure comprend également une deuxième face en portion de tronc de cône. Les deux faces sont en vis-à-vis. En effet, une infinité de plans perpendiculaires à l'axe X-X' coupent la première face et la deuxième face.

Le document DD 234998 A propose une embouchure comprenant une face de sortie désaxée par rapport au siège de soupape orientée vers la périphérie du cylindre.

La géométrie de la première face oriente la circulation des gaz et génère un mouvement tourbillonnaire des gaz dans le cylindre (swirl). La forme de la deuxième face améliore la perméabilité du conduit d'admission.

Cependant, du fait de la géométrie de l'embouchure, la soupape est relativement éloignée de la périphérie du cylindre. Aussi, le mouvement tourbillonnaire hélicoïdal des gaz dans le cylindre (swirl) n'est pas suffisamment important.

L'invention a pour but d'augmenter le niveau de swirl dans le cylindre, tout en préservant la perméabilité du conduit.

A cet effet, l'invention a pour objet un moteur du type précité, caractérisé en ce que la deuxième face comprend également une deuxième portion de tronc de profil de révolution, une infinité de plans perpendiculaires à l'axe (X-X') du siège de soupape coupant la première face et ladite deuxième portion, ladite deuxième portion précédant, dans le sens orienté vers la face de sortie, ladite première portion, ladite deuxième portion étant moins évasée que ladite première portion.

Suivant des modes particuliers de réalisation, la culasse comporte l'une ou plusieurs des caractéristiques suivantes, prise(s) isolément ou suivant toute combinaison techniquement possible :
- une infinité de plans perpendiculaires à l'axe (X-X') du siège de soupape coupent ladite portion désaxée et ladite première portion, une infinité de plans perpendiculaires à l'axe (X-X') du siège de soupape coupant ladite portion désaxée et ladite deuxième portion ;
- ladite première portion est une portion de tronc de cône, ladite deuxième portion étant une portion de tronc de cylindre ;
- ladite première portion et ladite deuxième portion ont pour axe l'axe (X-X') du siège de soupape ;
- ladite première portion s'étend sur moins d'un tour ;
- ladite portion désaxée est une portion de tronc de cône ;
- ladite portion désaxée a un axe parallèle à l'axe (X-X') du siège de soupape, l'axe de ladite portion désaxée étant espacé de l'axe (X-X') du siège de soupape ;
- ladite portion désaxée s'étend sur moins d'un tour ; et
- la distance minimale entre la soupape et la périphérie du cylindre est comprise entre 0,5 mm et 2 mm.

L'invention a également pour objet un véhicule automobile, caractérisé en ce que qu'il comprend un moteur à combustion interne tel que décrit ci-dessus.

L'invention sera mieux comprise à la lecture de la description qui va suivre, donnée uniquement à titre d'exemple, et se référant aux dessins annexés, sur lesquels :
- la figure 1 est une vue schématique partielle en section d'une culasse selon l'invention et d'un cylindre;
- la figure 2 est une vue schématique en section d'une culasse illustrant une étape du procédé de fabrication ;
- la figure 3 est une vue analogue à celle de la figure 2 illustrant une autre étape du procédé de fabrication ;
- la figure 4 est une vue analogue à celles des figures 2 et 3 illustrant une autre étape du procédé de fabrication.

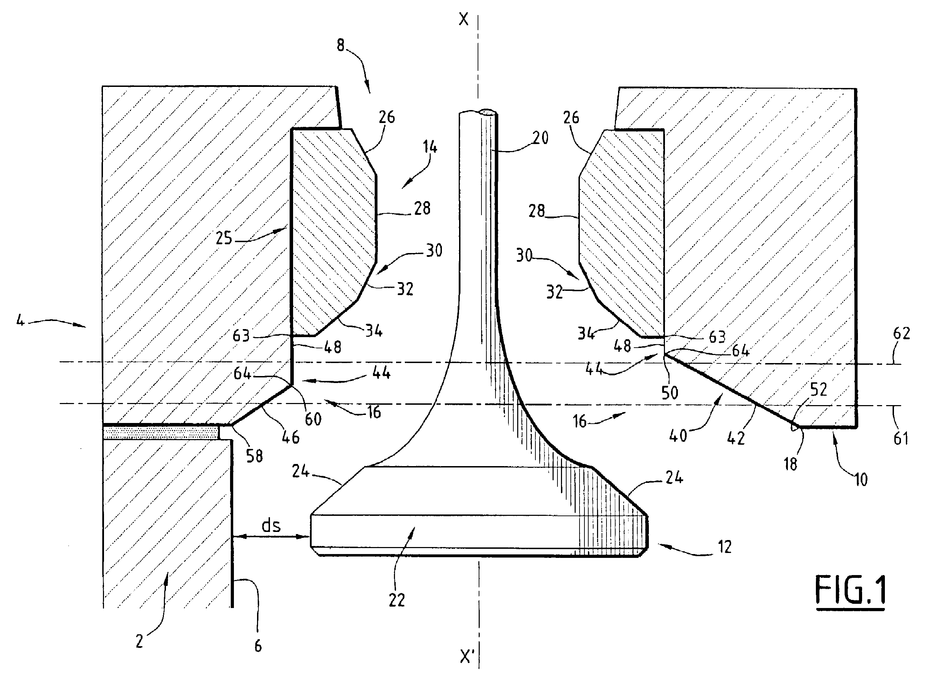

La figure 1 illustre schématiquement une section d'une partie d'un moteur à combustion interne de véhicule automobile. Le moteur comprend un bloc-cylindres 2 et une culasse 4. Le bloc-cylindres 2 comprend par exemple quatre cylindres 6 mais peut comprendre un nombre quelconque de cylindres 6. La culasse 4 forme une chambre de combustion avec chaque cylindre 6.

La culasse 4 comprend par exemple quatre conduits 8 de circulation de gaz vers chaque cylindre 6. Il s'agit par exemple de deux conduits 8 d'admission et de deux conduits 8 d'échappement.

Les conduits 8 débouchent sur une face de sortie 10 de la culasse 4.

Chaque conduit 8 d'admission ou d'échappement est muni d'une soupape 12 d'obturation mobile et comporte, dans le sens vers la face de sortie 10, un siège 14 de soupape d'axe X-X' pour recevoir la soupape 12, puis une embouchure 16 vers la face de sortie 10.

La face de sortie 10 de la culasse 4 est une face plane définissant, avec chaque cylindre 6, une chambre de combustion. Elle comporte, au niveau de chaque embouchure 16, un bord d'embouchure 18 correspondant à une extrémité de sortie de l'embouchure 16.

La soupape 12 est mobile suivant l'axe X-X' du siège de soupape 14. Elle comporte une tige 20 d'axe X-X' reliée à un profil de came (non représenté) de façon connue. Elle comporte également une tête évasée 22 solidaire de la tige 20. La tête 22 de la soupape 12 est propre à assurer, en reposant sur le siège de soupape 14, une obturation étanche du conduit 8. La tête 22 comporte à cet effet une face d'obturation 24 tronconique d'axe X-X'.

La distance minimale « ds » entre la soupape 12 et le cylindre 6 (figure 1) est par exemple comprise entre 0,5 mm et 2 mm.

Le siège de soupape 14 est par exemple formé par une bague, la bague étant encastrée dans un évidement 25 sensiblement cylindrique du conduit 8. Le siège de soupape 14 peut également être réalisé par usinage de la culasse 4.

Le siège de soupape 14 comprend, dans le sens orienté vers la face de sortie 10, une partie convergente 26 vers la face de sortie 10, une partie à diamètre sensiblement constant 28 et une partie divergente 30 vers la face de sortie 10.

La partie convergente 26 est par exemple formée par un tronc de cône d'axe X-X'. La partie à diamètre constant 28 forme un col du siège de soupape 14. Elle est par exemple un tronc de cylindre d'axe X-X'. La partie divergente 30 comprend par exemple, comme illustré sur la figure 1, deux troncs de cônes supérieur 32 et inférieur 34 successifs d'axe X-X'. Les deux troncs de cône 32, 34 s'évasent vers la face de sortie 10. Le tronc de cône inférieur 34 est, dans l'exemple illustré, plus évasé que le tronc de cône supérieur 32. Lorsque la soupape 12 est fermée, le tronc de cône inférieur 34 est au contact de la face d'obturation 24 de la soupape 12.

Le siège de soupape 14 a ainsi une forme de venturi.

Dans tout ce qui suit, l'axe d'une portion d'un tronc de profil de révolution est considéré comme étant l'axe du profil de révolution. Par exemple, l'axe d'une portion de tronc de cône de révolution est l'axe du cône de révolution. De plus, une portion désaxée par rapport à, par exemple, l'axe X-X', est une portion dont l'axe n'est pas X-X'. Son axe peut, par exemple, être incliné par rapport à l'axe X-X' ou être parallèle à l'axe X-X' tout en étant espacé de l'axe X-X'. De plus, on entend par pente, dans le cas où une génératrice d'un profil de révolution est une droite, l'angle formé entre la génératrice et le plan de la face de sortie 10.

L'embouchure 16 comprend une première face 40 comprenant une portion désaxée 42 de tronc de profil de révolution s'évasant vers la face de sortie 10 et une deuxième face 44 comprenant une première 46 et une deuxième 48 portions de tronc de profil de révolution.

La portion désaxée 42 est par exemple une portion de tronc de cône. Elle est désaxée par rapport à l'axe X-X'.

La portion désaxée 42 peut être réalisée par inclinaison de son axe par rapport à l'axe X-X'.

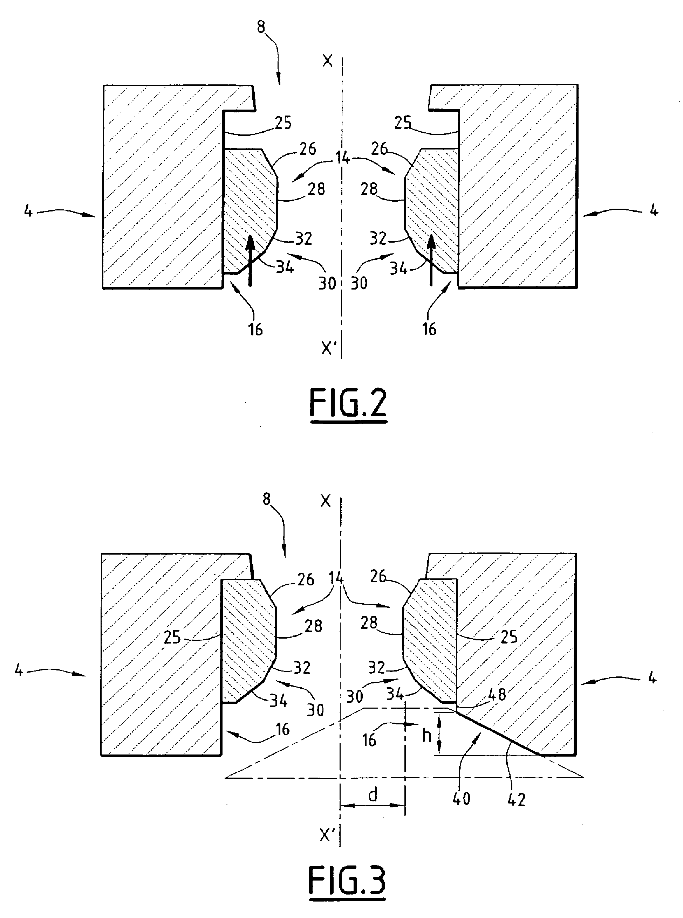

Cependant, l'axe de la portion désaxée 42 est avantageusement parallèle à l'axe X-X' et espacé de l'axe X-X' d'une distance « d », comme illustré sur la figure 3. L'usinage est ainsi simplifié.

La distance « d » est par exemple comprise entre 0,5 mm et 2 mm.

La portion désaxée 42 s'étend avantageusement sur moins d'un tour. Ainsi, la largeur de la portion désaxée 42 diminue progressivement et la portion désaxée 42 forme un croissant. Cependant, cette réalisation n'est pas limitative, la portion désaxée 42 peut en effet s'étendre sur un tour.

La portion désaxée 42 est avantageusement adjacente à la face de sortie 10.

La portion désaxée 42 est avantageusement plus évasée vers la face de sortie 10 que la première portion 44. Dans l'exemple considéré, la portion désaxée 42 a en effet une pente inférieure à celle de la première portion 46. La pente de la portion désaxée 42 est par exemple comprise entre 35° et 45 °.

Dans l'exemple illustré sur la figure 1, la portion désaxée 42 comprend un bord supérieur 50 et un bord inférieur 52.

Le bord supérieur 50 définit une portion d'ellipse.

Le bord inférieur 52 définit une portion de cercle coïncidant avec une partie du bord d'embouchure 18 de la face de sortie 10.

La première portion 46 de la deuxième face 44 s'évase vers la face de sortie 10. Il s'agit par exemple d'une portion de tronc de cône. Elle a avantageusement pour axe X-X'. Elle améliore la perméabilité de l'embouchure 16.

La première portion 46 s'étend avantageusement sur moins d'un tour. Elle a ainsi par exemple une forme de croissant.

Dans l'exemple illustré sur la figure 1, la première portion 46 comprend un bord inférieur 58 et un bord supérieur 60.

Le bord supérieur 60 définit une portion de cercle.

Le bord inférieur 58 comprend une partie circulaire en portion de cercle coïncidant avec une partie du bord d'embouchure 18 de la face de sortie 10 et rejoignant le bord inférieur 52 de la portion désaxée 42.

Le bord inférieur 58 comprend également une partie elliptique en portion d'ellipse coïncidant avec une partie du bord supérieur 50 de la portion désaxée 42.

La portion désaxée 42 et la première portion 46 sont en vis-à-vis. En effet, une infinité de plans 61 perpendiculaires à l'axe X-X' coupent la portion désaxée 42 de la première face 40 et la première portion 46 de la deuxième face 44.

La deuxième portion 48 de la deuxième face 44 est avantageusement une portion de tronc de cylindre. Ainsi, la deuxième portion 48 est moins évasée vers la face de sortie 10 que la première portion 46. C'est-à-dire que la pente de la première portion 46 est inférieure à la pente de la deuxième portion 48.

La deuxième portion 48 a avantageusement pour axe X-X'. Elle peut être une partie de l'évidement cylindrique 25 du conduit 8.

La deuxième portion et la portion désaxée sont en vis-à-vis, une infinité de plans 62 perpendiculaires à l'axe X-X' les coupant toutes les deux.

Dans l'exemple illustré sur la figure 1, la deuxième portion 48 comprend un bord supérieur 63 définissant un cercle adjacent au siège de soupape 14 et un bord inférieur 64.

Le bord inférieur 64 de la deuxième portion 48 comprend une partie circulaire définissant une portion de cercle et coïncidant avec le bord supérieur 60 de la première portion 46 et une partie elliptique définissant une portion d'ellipse coïncidant avec une partie du bord supérieur 50 de la portion désaxée 42.

La disposition des faces décrites ci-dessus n'est pas limitative. En effet, les première 40 et deuxième 44 faces peuvent par exemple comporter un nombre plus important de portions.

Le nombre de conduits 8 n'est pas limitatif. La culasse 4 peut en effet par exemple comprendre un unique conduit 8 d'admission et un unique conduit 8 d'échappement par cylindre 6.

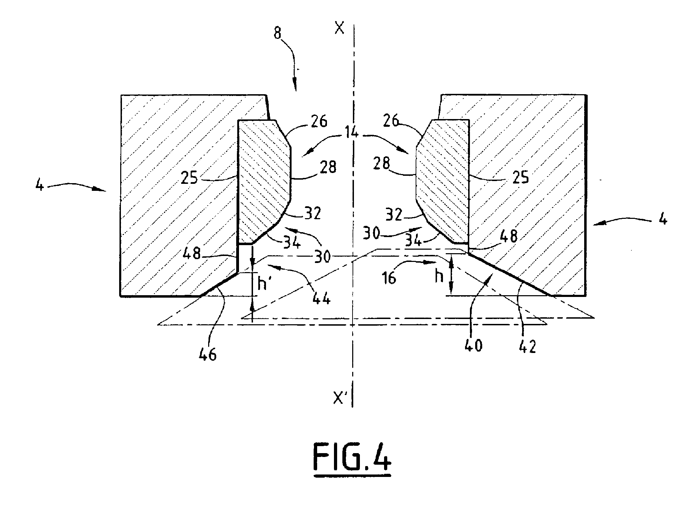

Les figures 2 à 4 illustrent un procédé de fabrication du conduit 8, fourni à titre d'exemple non limitatif.

Le procédé peut comporter un étape d'insertion de la bague formant siège de soupape 14 dans l'évidement cylindrique 25 du conduit 8, comme illustré sur la figure 2.

Le procédé comporte une première étape de fraisage désaxé par rapport à l'axe X-X'. On réalise par exemple ce fraisage désaxé avec une fraise en tronc de cône.

Le fraisage désaxé est réalisé sur une hauteur « h ». L'axe de la fraise est parallèle à l'axe X-X' et est espacé d'une distance « d ». La distance « d » est par exemple comprise entre 0,5 mm et 2 mm. La hauteur « h » est par exemple comprise entre 0,5 mm et 3 mm. La hauteur « h » correspond à la hauteur maximale de la portion désaxée 42 de la première face 40. Cependant, l'axe de la fraise peut aussi ne pas être parallèle à l'axe X-X'.

Le procédé comporte également une deuxième étape de fraisage avec par exemple une fraise en tronc de cône, comme illustré sur la figure 3. Ce fraisage est réalisé sur une hauteur « h' ».La hauteur « h' » est par exemple comprise entre 0,5 mm et 1,5 mm. La hauteur « h » correspond à la hauteur maximale de la première portion 46 de la deuxième face 44. De plus, ce fraisage est avantageusement d'axe X-X'.

On notera que le deuxième fraisage peut être réalisé avant ou après le premier fraisage.

Avec l'invention, la distance minimale « ds » entre la soupape 12 et le cylindre 6 est réduite. En effet, la deuxième portion 48 de la deuxième face 44 étant moins évasée que la première portion 46 de la deuxième face 44, l'axe X-X' peut être plus proche de la périphérie du cylindre 6.

Si l'invention est appliquée aux conduits 8 d'admission et aux conduits 8 d'échappement, cela a également pour effet d'augmenter l'épaisseur de matière entre les conduits et/ou de permettre d'augmenter, à diamètre de cylindre 6 constant, le diamètre des conduits 8.

La première portion 46 de la deuxième face 44 assure une bonne perméabilité de la soupape 12, notamment dans des phases de faible levée de la soupape 12.

La portion désaxée 42 de la première face 40, du fait de son désaxage, oriente la circulation des gaz et génère un mouvement tourbillonnaire des gaz (swirl).

## Revendications

1. Moteur à combustion interne de véhicule automobile, du type comprenant au moins un cylindre (6) et une culasse (4) formant ensemble une chambre de combustion, la culasse (4) comportant au moins un conduit (8) de circulation de gaz débouchant sur une face (10) de sortie de la culasse (4), le conduit (8) comportant successivement, dans le sens orienté vers la face de sortie (10), un siège (14) de soupape d'axe (X-X') pour recevoir une soupape (12) puis une embouchure (16) vers la face de sortie (10), l'embouchure (16) comprenant :
- une première face (40) comprenant une portion (42) désaxée de tronc de profil de révolution s'évasant vers la face de sortie (10), ladite portion désaxée (42) étant désaxée par rapport à l'axe (X-X') du siège de soupape (14); et
- une deuxième face (44) comprenant, d'une part, une première portion (46) de tronc de profil de révolution s'évasant vers la face de sortie (10), une infinité de plans (61) perpendiculaires à l'axe (X-X') du siège de soupape (14) coupant la première face (40) et ladite première portion (46), et, d'autre part, une deuxième portion (48) de tronc de profil de révolution, une infinité de plans (62) perpendiculaires à l'axe (X-X') du siège de soupape (14) coupant la première face (40) et ladite deuxième portion (48), ladite deuxième portion (48) précédant, dans le sens orienté vers la face de sortie (10), ladite première portion (46), ladite deuxième portion (48) étant moins évasée que ladite première portion (46), **caractérisé en ce que** la première portion (46) de la seconde face (44) débouche en périphérie de la face de sortie (10) ce qui permet de rapprocher l'axe (X-X') du siège de soupape de la périphérie du cylindre (6) et permet une distance (ds) entre la soupape (12) et la périphérie du cylindre (6) comprise entre 0,5 mm et 2 mm.

2. Moteur selon la revendication 1, **caractérisé en ce qu'**une infinité de plans perpendiculaires à l'axe (X-X') du siège de soupape (14) coupent ladite portion désaxée (42) et ladite première portion (46), une infinité de plans perpendiculaires à l'axe (X-X') du siège de soupape (14) coupant ladite portion désaxée (42) et ladite deuxième portion (48).

3. Moteur selon la revendication 1 ou la revendication 2, **caractérisé en ce que** ladite première portion (46) est une portion de tronc de cône, ladite deuxième portion (48) étant une portion de tronc de cylindre.

4. Moteur selon l'une quelconque des revendications précédentes, **caractérisé en ce que** ladite première portion (46) et ladite deuxième portion (48) ont pour axe l'axe (X-X') du siège de soupape (14).

5. Moteur selon l'une quelconque des revendications précédentes, **caractérisé en ce que** ladite première portion (46) s'étend sur moins d'un tour.

6. Moteur selon l'une quelconque des revendications précédentes, **caractérisé en ce que** ladite portion désaxée (42) est une portion de tronc de cône.

7. Moteur selon l'une quelconque des revendications précédentes, **caractérisé en ce que** ladite portion désaxée (42) a un axe parallèle à l'axe (X-X') du siège de soupape (14), l'axe de ladite portion désaxée (42) étant espacé de l'axe (X-X') du siège de soupape (14).

8. Moteur selon l'une quelconque des revendications précédentes, **caractérisé en ce que** ladite portion désaxée (42) s'étend sur moins d'un tour.

9. Véhicule automobile **caractérisé en ce qu'**il comprend un moteur à combustion interne selon l'une quelconque des revendications précédentes.

## Claims

1. Motor vehicle internal combustion engine of the type comprising at least one cylinder (6) and a cylinder head (4) together forming a combustion chamber, the cylinder head (4) comprising at least one gas circulation duct (8) opening onto an outlet face (10) of the cylinder head (4), the duct (8) comprising, in succession in the direction directed toward the outlet face (10), a valve seat (14) of axis (X-X') to accommodate a valve (12), then a mouth (16) towards the outlet face (10), the mouth (16) comprising:
- a first face (40) comprising an off-axis frustum portion (42) with a profile exhibiting symmetry of revolution widening toward the outlet face (10), said off-axis portion (42) being off axis with respect to the axis (X-X') of the valve seat (14); and
- a second face (44) comprising, on the one hand, a first frustum portion (46) with a profile exhibiting symmetry of revolution widening towards the outlet face (10), and infinite number of planes (61) perpendicular to the axis (X-X') of the valve seat (14) intersecting the first face (40) and the said first portion (46) and, on the other hand, a second frustum portion (46) of a profile exhibiting symmetry of revolution, an infinity of planes (62) perpendicular to the axis (X-X') of the valve seat (14) intersecting the first face (40) and the said second portion (48), the said second portion (48) preceding, in the direction directed towards the outlet face (10), the said first portion (46), the said second portion (48) being less flared than the said first portion (46), **characterized in that** the first portion (46) of the second face (44) opens onto the periphery of the outlet face (10) so that the axis (X-X') of the valve seat can be brought closer to the periphery of the cylinder (6) and allow a distance (ds) of between 0.5 mm and 2 mm between the valve (12) and the periphery of the cylinder (6).

2. Engine according to Claim 1, **characterized in that** an infinite number of planes perpendicular to the axis (X-X') of the valve seat (14) intersect the said off-axis portion (42) and the said first portion (46), an infinite number of planes perpendicular to the axis (X-X') of the valve seat (14) intersecting the said off-axis portion (42) and the said second portion (48).

3. Engine according to Claim 1 or Claim 2, **characterized in that** the said first portion (46) is a cone frustum portion, the said second portion (48) being a cylinder frustum portion.

4. Engine according to any of the preceding claims, **characterized in that** the said first portion (46) and the said second portion (48) have the axis (X-X') of the valve seat (14) as their axis.

5. Engine according to any one of the preceding claims, **characterized in that that** the said first portion (46) extends over less than one revolution.

6. Engine according to any one of the preceding claims, **characterized in that** the said off-axis portion (42) is a cone frustum portion.

7. Engine according to any one of the preceding claims, **characterized in that** the said off-axis portion (42) has an axis parallel to the axis (X-X') of the valve seat (14), the axis of the said off-axis portion (42) being spaced away from the axis (X-X') of the valve seat (14).

8. Engine according to any one of the preceding claims, **characterized in that** the said off-axis portion (42) extends over less than one revolution.

9. Motor vehicle **characterized in that** it comprises an internal combustion engine according to any one of the preceding claims.

## Patentansprüche

1. Brennkraftmaschine für Kraftfahrzeug des Typs, der wenigstens einen Zylinder (6) und einen Zylinderkopf (4), die zusammen eine Brennkammer bilden, enthält, wobei der Zylinderkopf (4) wenigstens eine Gaszirkulationsleitung (8) aufweist, die in die Austrittsfläche (10) des Zylinderkopfs (4) mündet, wobei die Leitung (8) nacheinander in dem zur Austrittsfläche (10) orientierten Richtungssinn einen Ventilsitz (14) mit Achse (X-X') für die Aufnahme eines Ventils (12) und dann eine Mündung (16) in die Austrittsfläche (10) aufweist, wobei die Mündung (16) enthält:
- eine erste Fläche (40) mit einem achsenversetzten Stumpfabschnitt (42) mit rotationssymmetrischem Profil, das sich zur Austrittsfläche (10) erweitert, wobei der achsenversetzte Abschnitt (42) in Bezug auf die Achse (X-X') des Ventilsitzes (14) achsenversetzt ist; und
- eine zweite Fläche (44), die einerseits einen ersten Stumpfabschnitt (46) mit rotationssymmetrischem Profil, das sich zur Austrittsfläche (10) erweitert, wobei unendlich viele Ebenen (61) senkrecht zu der Achse (X-X') des Ventilsitzes (14) die erste Fläche (40) und den ersten Abschnitt (46) schneiden, und andererseits einen zweiten Stumpfabschnitt (48) mit rotationssymmetrischem Profil aufweist, wobei unendlich viele Ebenen (62) senkrecht zu der Achse (X-X') des Ventilsitzes (14) die erste Fläche (40) und den zweiten Abschnitt (48) schneiden, wobei der zweite Abschnitt (48) in dem zur Austrittsfläche (10) orientierten Richtungssinn dem ersten Abschnitt (46) vorhergeht, wobei der zweite Abschnitt (48) weniger erweitert ist als der erste Abschnitt (46), **dadurch gekennzeichnet, dass** der erste Abschnitt (46) der zweiten Fläche (44) in den Umfang der Austrittsfläche (10) mündet, was eine Annäherung der Achse (X-X') des Ventilsitzes an den Umfang des Zylinders (6) ermöglicht und einen Abstand (ds) zwischen dem Ventil (12) und dem Umfang des Zylinders (6) im Bereich von 0,5 mm bis 2 mm ermöglicht.

2. Maschine nach Anspruch 1, **dadurch gekennzeichnet, dass** unendlich viele Ebenen senkrecht zu der Achse (X-X') des Ventilsitzes (14) den achsenversetzten Abschnitt (42) und den ersten Abschnitt (46) schneiden, wobei unendlich viele Ebenen senkrecht zu der Achse (X-X') des Ventilsitzes (14) diesen achsenversetzten Abschnitt (42) und den zweiten Abschnitt (48) schneiden.

3. Maschine nach Anspruch 1 oder Anspruch 2, **dadurch gekennzeichnet, dass** der erste Abschnitt (46) ein Kegelstumpfabschnitt ist, wobei der zweite Abschnitt (48) ein Abschnitt eines schief abgeschnittenen Zylinders ist.

4. Maschine nach einem der vorhergehenden Ansprüche, **dadurch gekennzeichnet, dass** der erste Abschnitt (46) und der zweite Abschnitt (48) als Achse die Achse (X-X') des Ventilsitzes (14) haben.

5. Maschine nach einem der vorhergehenden Ansprüche, **dadurch gekennzeichnet, dass** sich der erste Abschnitt (46) um wenigstens einen Umfang erstreckt.

6. Maschine nach einem der vorhergehenden Ansprüche, **dadurch gekennzeichnet, dass** der achsenversetzte Abschnitt ein Kegelstumpfabschnitt ist.

7. Maschine nach einem der vorhergehenden Ansprüche, **dadurch gekennzeichnet, dass** der achsenversetzte Abschnitt (42) eine Achse parallel zur Achse (X-X') des Ventilsitzes (14) hat, wobei die Achse des achsenversetzten Abschnitts (42) von der Achse (X-X') des Ventilsitzes (14) beabstandet ist.

8. Maschine nach einem der vorhergehenden Ansprüche, **dadurch gekennzeichnet, dass** sich der achsenversetzte Abschnitt (42) um wenigstens einen Umfang erstreckt.

9. Kraftfahrzeug, **dadurch gekennzeichnet, dass** es eine Brennkraftmaschine nach einem der vorhergehenden Ansprüche enthält.
